# EUROPÄISCHE PATENTANMELDUNG

(11) **EP 4 852 287 A1**
(43) Veröffentlichungstag der Anmeldung: **09.12.2026**
(21) Anmeldenummer: 26180226.8
(22) Anmeldetag: 21.05.2026
(51) Int. Cl.: H02K 15/36

(54) **TWISTVERFAHREN, ELEKTROMASCHINE UND KRAFTFAHRZEUG**

(30) Priorität: 03.06.2025 DE 102025121680
(71) Anmelder: Volkswagen Aktiengesellschaft, 38440 Wolfsburg (DE)
(72) Erfinder: Shaghaghi, Arash, 38440 Wolfsburg (DE); Sinning, Lukas, 38440 Wolfsburg (DE); Müller, David, 38440 Wolfsburg (DE); Coßmann, Julian, 38440 Wolfsburg (DE); Lieber, Simon, 38440 Wolfsburg (DE); Sperling, Michael, 38440 Wolfsburg (DE); Bachmann, Tim, 38440 Wolfsburg (DE); Jedlitschka, Rudolf, 38440 Wolfsburg (DE)

(57) **Zusammenfassung**

Die vorliegende Erfindung betrifft ein Verfahren zum Twisten von Hairpinenden (1) von Hairpins (2) eines Stators (3) für eine Elektromaschine (4) zum Antreiben eines Kraftfahrzeugs (5). Gemäß dem Verfahren erfolgt ein mehrstufiges Twisten der Hairpinenden (1), wobei zwischen zwei Twistvorgängen ein Abstand zwischen einem Twistwerkzeug (11) und einem Statorgrundkörper (6) des Stators (3) vergrößert wird. Ferner betrifft die Erfindung eine Elektromaschine (4) zum Antreiben eines Kraftfahrzeugs (5) sowie ein Kraftfahrzeug (5) mit einem elektrischen oder hybriden Antriebssystem (18).

## Beschreibung

Die vorliegende Erfindung betrifft ein Verfahren zum Twisten von Hairpinenden von Hairpins eines Stators für eine Elektromaschine zum Antreiben eines Kraftfahrzeugs. Ferner betrifft die Erfindung eine Elektromaschine zum Antreiben eines Kraftfahrzeugs sowie ein Kraftfahrzeug mit einem elektrischen Antriebssystem zum Antreiben des Kraftfahrzeugs.

Es sind Verfahren zur Herstellung von Wickelköpfen von Statoren bekannt, bei welchen aus einem Statorgrundkörper herausragende Hairpinenden von Hairpins in Aufnahmen eines Twistwerkzeugs aufgenommen und in entgegengesetzte Umfangsrichtungen getwistet werden. Ein solches Verfahren ist beispielsweise aus dem Dokument CN 112 039 298 A1 bekannt.

Ein herkömmliches Twistverfahren von Hairpins eines Stators ist beispielsweise aus dem Dokument EP 4 084 305 A1 bekannt. Zunächst werden Hairpins mit unterschiedlich langen Hairpinenden in Statornuten eines Statorgrundkörpers des Stators derart angeordnet, dass die Hairpinenden an einer Grundkörperstirnseite des Statorgrundkörpers herausragen.

In einem ersten Arbeitsschritt werden nur die langen Hairpinenden in Ausnehmungen einer Twistkrone aufgenommen und in Umfangsrichtung des Statorgrundkörpers vorgetwistet. Die kürzeren Hairpinenden sind während des ersten Arbeitsschritts außerhalb des Twistwerkzeugs angeordnet.

In einem zweiten Arbeitsschritt werden sämtliche Hairpinenden in die Ausnehmungen des Twistwerkzeugs aufgenommen und getwistet. Das Twistwerkzeug wird hierbei in Umfangsrichtung des Stators gedreht und in axialer Richtung zum Statorgrundkörper zugestellt. Am Ende dieses Twistvorgangs stehen alle Hairpinenden in axialer Richtung vom Statorgrundkörper ab, sodass das Twistwerkzeug in axialer Richtung von den Hairpinenden wegbewegt werden kann.

Bei dem Dokument DE 10 2014 208 082 A1 wird ein unterschiedliches Twisten der Hairpinenden durch bewegbare Halteelemente bewirkt, die innerhalb einiger Ausnehmungen des Twistwerkzeugs angeordnet sind. In einem ersten Arbeitsschritt sind die Halteelemente und die Hairpinenden in den Ausnehmungen angeordnet, während das Twistwerkzeug in Umfangsrichtung bewegt wird. Anschließend werden die Halteelemente aus den Ausnehmungen gezogen, sodass die entsprechenden Ausnehmungen in Umfangsrichtung vergrößert sind. Schließlich erfolgt in einem zweiten Arbeitsschritt ein weiteres Twisten, bei welchem die Hairpinenden, die in den vergrößerten Ausnehmungen angeordnet sind, nicht mitgetwistet werden. Am Ende des Twistprozesses sind sämtliche Hairpinenden in axialer Richtung ausgerichtet.

Bekannte Verfahren zum Twisten von Hairpinenden von Hairpins eines Stators für eine Elektromaschine zum Antreiben eines Kraftfahrzeugs haben den Nachteil, dass die Hairpinenden nach dem Twisten in axialer Richtung vom Statorgrundkörper weg weisen und somit einen erhöhten Bauraumbedarf aufweisen.

Es ist daher Aufgabe der vorliegenden Erfindung, die voranstehend beschriebenen Nachteile bei einem Stator für eine Elektromaschine zum Antreiben eines Kraftfahrzeugs zu beheben oder zumindest teilweise zu beheben. Insbesondere ist es Aufgabe der vorliegenden Erfindung, ein Verfahren zum Twisten von Hairpinenden von Hairpins eines Stators für eine Elektromaschine zum Antreiben eines Kraftfahrzeugs, eine Elektromaschine zum Antreiben eines Kraftfahrzeugs und ein Kraftfahrzeug mit einem elektrischen oder hybriden Antriebssystem zu schaffen, die auf eine einfache und kostengünstige Art und Weise einen verringerten Bauraumbedarf eines Wickelkopfs und/oder ein reduziertes Gewicht eines Wickelkopfs aufweisen.

Die voranstehende Aufgabe wird durch die Patentansprüche gelöst. Demnach wird die Aufgabe durch ein Verfahren zum Twisten von Hairpinenden von Hairpins eines Stators für eine Elektromaschine zum Antreiben eines Kraftfahrzeugs mit den Merkmalen des unabhängigen Anspruchs 1, durch eine Elektromaschine zum Antreiben eines Kraftfahrzeugs mit den Merkmalen des nebengeordneten Anspruchs 9 sowie durch ein Kraftfahrzeug mit einem elektrischen oder hybriden Antriebssystem mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Elektromaschine sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Twisten von Hairpinenden von Hairpins eines Stators für eine Elektromaschine zum Antreiben eines Kraftfahrzeugs gelöst. Das Verfahren weist auf:
- Bereitstellen eines Statorgrundkörpers, bei welchem die Hairpinenden an einer Grundkörperstirnseite des Statorgrundkörpers aus Statornuten des Statorgrundkörpers herausragen,
- Einführen von Hairpinendbereichen der Hairpinenden in Aufnahmen eines Twistwerkzeugs,
- Erstes Twisten der Hairpinenden mit dem Twistwerkzeug derart, dass die Hairpinendbereiche in den Aufnahmen bleiben und zwischen den Hairpinendbereichen und den übrigen Bereichen der Hairpinenden jeweils ein erster Winkel ausgebildet ist,
- Herausbewegen eines Teilbereichs der Hairpinendbereiche aus den Aufnahmen und
- Zweites Twisten der Hairpinenden mit dem Twistwerkzeug derart, dass zwischen den Hairpinendbereichen und den übrigen Bereichen der Hairpinenden jeweils ein zweiter Winkel ausgebildet ist.

Zunächst wird der Statorgrundkörper bereitgestellt. Der Statorgrundkörper ist vorzugsweise aus einer Vielzahl von zu einem Stapel zusammengefassten Statorblechscheiben zusammengesetzt. Die Statorblechscheiben sind vorzugsweise koaxial zu einer Statorlängsachse des Stators angeordnet. Die Statorblechscheiben sind vorzugsweise jeweils elektrisch isoliert, beispielsweise durch Backlack oder dergleichen. In den Statorgrundscheiben sind Freimachungen ausgebildet, durch die im Statorgrundkörper Statornuten gebildet sind. Die Statornuten erstrecken sich in axialer Richtung des Stators vorzugsweise durch den gesamten Statorgrundkörper und sind an den Grundkörperstirnseiten des Statorgrundkörpers offen ausgebildet. In Umfangsrichtung weisen die Statornuten eine Statornutbreite auf. In radialer Richtung weisen die Statornuten eine Nuttiefe auf. Vorzugsweise sind die Statornuten zur Statorlängsachse hin offen ausgebildet. Der Statorgrundkörper erstreckt sich vorzugsweise um eine zentrale Freimachung, die zur Aufnahme eines Rotors der Elektromaschine ausgebildet ist.

In den Statornuten sind Hairpins zur Herstellung einer Statorwicklung angeordnet. Die Hairpins sind vorzugsweise als I-Pins oder U-Pins ausgebildet. Ein I-Pin ist stabförmig ausgebildet. U-Pins sind beispielsweise aus einem langen I-Pin gebildet, der in der Mitte einen Biegebereich von beispielsweise 180° aufweist. Demnach weisen U-Pins zwei parallele oder zumindest nahezu parallele Schenkel auf, die über den Biegebereich miteinander verbunden sind. Im Rahmen der Erfindung werden die Schenkel dem besseren Verständnis halber jeweils als "Hairpin" bezeichnet.

Die Hairpins sind vorzugsweise derart in den Statornuten angeordnet, dass in jeder Statornut in Nutbreitenrichtung nur ein Hairpin angeordnet ist. Eine Hairpinbreite der Hairpins entspricht vorzugsweise der Nutbreite bzw. ist zur besseren Montierbarkeit geringfügig kleiner. Die Hairpins sind vorzugsweise in Nuttiefenrichtung übereinander gestapelt bzw. in mehreren Nutlagen in den Statornuten angeordnet. In jeder Nutlage einer Statornut ist somit ein Hairpin angeordnet.

An den Grundkörperstirnseiten des Statorgrundkörpers ragen die freien Hairpinenden der Hairpins aus den Statornuten heraus. Unter freien Hairpinenden werden im Rahmen der Erfindung die Abschnitte der Hairpins verstanden, die im eingebauten Zustand außerhalb des Statorgrundkörpers angeordnet sind und ein Ende des Hairpins bilden. Vorzugsweise weisen die freien Hairpinenden im Bereich des Statorgrundkörpers die elektrische Isolierungsschicht auf. Bei I-Pins weisen die Hairpins an beiden Grundkörperstirnseiten des Statorgrundkörpers jeweils ein freies Hairpinende auf. Bei U-Pins weisen die Hairpins nur an einer Grundkörperstirnseite des Statorgrundkörpers jeweils ein freies Hairpinende auf. Bei U-Pins ist an der anderen Grundkörperstirnseite des Statorgrundkörpers der Biegebereich angeordnet.

Die Hairpinendbereiche der Hairpinenden werden in Aufnahmen des Twistwerkzeugs eingeführt. Das Twistwerkzeug weist vorzugsweise für die einzelnen Nutlagen jeweils eine ringförmige Twistkrone auf, die in Umfangsrichtung verdrehbar sind. Benachbarte Twistkronen sind vorzugsweise zum Drehen in entgegengesetzte Richtungen ausgebildet. Es kann auch vorgesehen sein, dass Hairpinenden aus zwei Nutlagen in die Aufnahmen einer einzelnen Twistkrone aufnehmbar und somit gemeinsam in dieselbe Richtung twistbar sind. Die Aufnahmen sind vorzugsweise derart ausgebildet, dass ein relatives Verkippen der Hairpins zu den Aufnahmen beim ersten Twisten vermieden ist. Demnach weisen die Aufnahmen vorzugsweise einen ersten Aufnahmebereich auf, in welchen der Hairpinendbereich beim ersten Twisten eingeführt ist, und welcher innere Abmessungen aufweist, die den äußeren Abmessungen des Hairpinendberichs entsprechen oder zumindest im Wesentlichen entsprechen, sodass ein leichtes Einführen sowie Herausbewegen der Hairpinendbereiche gewährleistet ist.

Unter einem Hairpinendbereich wird im Rahmen der Erfindung ein Teilbereich des Hairpinendes verstanden. Eine Länge des Hairpinendbereichs beträgt vorzugsweise weniger als die Hälfte einer Länge des Hairpinendes. Vorzugsweise beträgt die Länge des Hairpinendbereichs zwischen 5 % und 30 % der Länge des Hairpinendes, besonders bevorzugt etwa 15 - 20 %. Somit ist ein sicherer Halt des Hairpinendbereichs in der Aufnahme des Twistwerkzeugs beim ersten Twisten gewährleistet und ein Herausrutschen des Hairpinendbereichs aus der Aufnahme vermeidbar.

Beim ersten Twisten wird ein relatives Verdrehen zwischen dem Twistwerkzeug und dem Statorgrundkörper bewirkt, beispielsweise durch Drehen des Twistwerkzeugs in Umfangsrichtung und/oder Drehen des Statorgrundkörpers in Umfangsrichtung. Das erste Twisten erfolgt derart, dass zwischen den Hairpinendbereichen und den übrigen Bereichen der Hairpinenden, die in den Statornuten angeordnet sind, jeweils der erste Winkel ausgebildet ist. Der erste Winkel ist zudem zwischen den Hairpinenden und den Statornuten ausgebildet. Ein Winkel zwischen den Hairpinendbereichen und den übrigen Bereichen der Hairpinenden, die in den Statornuten angeordnet sind, beträgt vor dem ersten Twisten vorzugsweise 180°, wenn die Hairpins zunächst gerade ausgebildet sind. Durch das erste Twisten wird dieser Winkel verkleinert und wird nach dem ersten Twisten als "*erster Winkel*" bezeichnet. Der erste Winkel beträgt vorzugsweise zwischen 150° und 130°.

Vorzugsweise liegen die, außerhalb der Aufnahmen angeordneten Hairpinenden, nach dem ersten Twisten flächig aneinander an, sodass ein weiteres Verdrehen in Umfangsrichtung formschlüssig vermieden ist. Das Verdrehen erfolgt zudem derart, dass die Hairpinendbereiche in den Aufnahmen des Twistwerkzeugs bleiben. Hierbei wird vorzugsweise ein relativer Abstand zwischen dem Twistwerkzeug und dem Statorgrundkörper reduziert. Das Reduzieren des relativen Abstands zwischen dem Twistwerkzeug und dem Statorgrundkörper erfolgt vorzugsweise derart, dass die Hairpinendbereiche während des ersten Twistens vollständig in den Aufnahmen verbleiben, sodass eine Eintauchtiefe der Hairpins in die Aufnahmen konstant bleibt.

Vorzugsweise wird der relative Abstand zwischen dem Statorgrundkörper und dem Twistwerkzeug nach dem ersten Twisten vergrößert, beispielsweise durch Wegbewegen des Statorgrundkörpers vom Twistwerkzeug und/oder Wegbewegen des Twistwerkzeugs vom Statorgrundkörper. Hierdurch werden die Hairpinendbereiche ein Stück aus den Aufnahmen gezogen. Alternativ kann das Vergrößern des relativen Abstands auch schon während des ersten Twistens, beispielsweise zum Ende des ersten Twistens, erfolgen. Weiter bevorzugt erfolgt das Vergrößern des relativen Abstands zwischen dem Statorgrundkörper und dem Twistwerkzeug derart, dass eine relative Kippbewegung des gesamten Hairpinendbereichs zum Twistwerkzeug beim zweiten Twisten gewährleistet ist. Eine Eintauchtiefe des Hairpins in die Aufnahme beträgt vorzugsweise zwischen dem 0,7- und dem 1,3-fachen der Pinbreite des Hairpins.

Anschließend erfolgt das zweite Twisten. Das zweite Twisten kann auch während des Vergrößerns des relativen Abstands, beispielsweise am Ende des Vergrößerns des relativen Abstands, erfolgen. Beim zweiten Twisten wird ein relatives Verdrehen zwischen dem Twistwerkzeug und dem Statorgrundkörper bewirkt, beispielsweise durch Drehen des Twistwerkzeugs in Umfangsrichtung und/oder Drehen des Statorgrundkörpers in Umfangsrichtung. Das zweite Twisten erfolgt vorzugsweise in dieselbe Umfangsrichtung wie das erste Twisten. Alternativ kann das zweite Twisten auch in die entgegengesetzte Umfangsrichtung erfolgen. Das zweite Twisten erfolgt derart, dass zwischen den Hairpinendbereichen und den übrigen Bereichen der Hairpinenden, die nicht in den Aufnahmen angeordnet sind, jeweils der zweite Winkel ausgebildet ist. Der zweite Winkel ist vom ersten Winkel verschieden. Vorzugsweise ist zwischen den Hairpinenden und den Statornuten weiterhin der erste Winkel ausgebildet. Besonders bevorzugt erfolgt das zweite Twisten derart, dass die Hairpinendbereiche durch das zweite Twisten aus den Aufnahmen herausgleiten.

Ein erfindungsgemäßes Verfahren zum Twisten von Hairpinenden von Hairpins eines Stators für eine Elektromaschine zum Antreiben eines Kraftfahrzeugs hat gegenüber herkömmlichen Verfahren den Vorteil, dass mit einfachen Mitteln sowie auf eine kostengünstige Art und Weise ein Statorwickelkopf erzeugbar ist, der besonders geringe axiale Abmessungen aufweist. Durch das mehrstufige Twisten können somit Hairpins mit einer reduzierten Länge verwendet werden, sodass weniger Abfall durch Ablängen entsteht. Bei gleichen Abmessungen ist somit ein Stator mit einer höheren Leistung bereitstellbar.

Gemäß einer bevorzugten Weiterentwicklung kann bei einem Verfahren zum Twisten von Hairpinenden von Hairpins eines Stators für eine Elektromaschine zum Antreiben eines Kraftfahrzeugs vorgesehen sein, dass das Herausbewegen des Teilbereichs der Hairpinendbereiche aus den Aufnahmen derart erfolgt, dass der Teilbereich größer ist als der in den Aufnahmen verbleibende Restbereich des Hairpinendbereichs. Demnach erfolgt das Herausbewegen der Hairpinendbereichen aus den Aufnahmen vorzugsweise derart, dass eine Eintauchtiefe der Hairpins in den Aufnahmen direkt nach dem Einführen und vor dem Herausbewegen mehr als doppelt so groß, vorzugsweise dreimal so groß, ist wie nach dem Herausbewegen. Vorzugsweise ist die Eintauchtiefe der Hairpins in den Aufnahmen direkt nach dem Einführen und vor dem Herausbewegen etwa vier- bis fünfmal so groß wie nach dem Herausbewegen. Dies hat den Vorteil, dass mit einfachen Mitteln sowie auf eine kostengünstige Art und Weise das zweite Twisten verbessert und somit ein besonders flacher Wickelkopf bereitstellbar ist.

Es ist bevorzugt, dass das Herausbewegen des Teilbereichs der Hairpinendbereiche aus den Aufnahmen derart erfolgt, dass der gesamte in den Aufnahmen verbleibende Restbereich des Hairpinendbereichs zum Twistwerkzeug elektrisch leitend ist. Demnach ist es bevorzugt, dass nach dem Herausbewegen kein isolierter Abschnitt des Hairpins in der Aufnahme verbleibt. Dies hat den Vorteil, dass mit einfachen Mitteln sowie auf eine kostengünstige Art und Weise ein paarweises Verschweißen der Hairpinenden verbessert ist. Ein Anbrennen der Isolierung beim Verschweißen ist auf diese Weise besser vermeidbar.

Weiter bevorzugt erfolgt das Einführen von Hairpinendbereichen der Hairpinenden in den Aufnahmen des Twistwerkzeugs derart, dass ein umfänglich isolierter Bereich der Hairpinendbereiche in den Aufnahmen angeordnet ist. Vorzugsweise weist der Abschnitt des Hairpinendbereichs eine durchgängige Isolierung mit dem Bereich des Hairpins, welcher in der Statornut angeordnet ist, auf. Demnach ist es bevorzugt, dass nach dem Einführen und vor dem Herausbewegen die Isolierung des Hairpins in die Aufnahme hineinragt. Dies hat den Vorteil, dass mit einfachen Mitteln sowie auf eine kostengünstige Art und Weise das erste Twisten verbessert und somit ein besonders flacher Wickelkopf bereitstellbar ist.

In einer besonders bevorzugten Ausgestaltung kann bei einem Verfahren zum Twisten von Hairpinenden von Hairpins eines Stators für eine Elektromaschine zum Antreiben eines Kraftfahrzeugs vorgesehen sein, dass ein Twistwerkzeug verwendet wird, das an einer dem Statorgrundkörper zugewandten Öffnung der Aufnahmen eine Aufweitung aufweist. Die Aufweitung kann erfindungsgemäß symmetrisch oder asymmetrisch ausgebildet sein. Das Herausbewegen des Teilbereichs des Hairpinendbereichs aus der Aufnahme erfolgt vorzugsweise derart, dass der Hairpin nur noch in den Bereich der Aufweitung in die Aufnahme hineinragt. Gleichwohl kann erfindungsgemäß vorgesehen sein, dass das Hairpinende derart in den Bereich der Aufnahme, der in Einführungsrichtung hinter der Aufweitung ausgebildet ist, hineinragt, dass das relative Verdrehen des Hairpinendes zum Twistwerkzeug beim zweiten Twisten gewährleistet ist. Dies hat den Vorteil, dass mit einfachen Mitteln sowie auf eine kostengünstige Art und Weise ein Einführen der Hairpins in die Aufnahmen erleichtert ist. Ferner ist durch die Aufweitung das Resultat des zweiten Twistens verbesserbar.

Vorzugsweise wird ein Twistwerkzeug verwendet, bei welchem die Aufweitung als Rundung, als Fase oder als Kombination aus Rundung und Fase ausgebildet ist. Besonders bevorzugt weist die Aufweitung auf beiden gegenüberliegenden Seiten oder umlaufend eine Rundung auf. Alternativ ist bevorzugt, dass die Aufweitung des Twistwerkzeugs auf der Seite, die beim zweiten Twisten gegen die Hairpins drückt, eine Rundung und auf der gegenüberliegenden Seite eine Fase aufweist. Die Rundung verbessert ein Abrollen des Hairpinendes am Twistwerkzeug beim zweiten Twisten. Dies hat den Vorteil, dass mit einfachen Mitteln sowie auf eine kostengünstige Art und Weise das Resultat des zweiten Twistens verbesserbar ist.

Gemäß einer bevorzugten Ausführungsform der Erfindung erfolgt das zweite Twisten derart, dass der zweite Winkel kleiner ist als der erste Winkel. Demnach wird beim ersten Twisten der freie Bereich des Hairpinendes, der zwischen dem Twistwerkzeug und dem Statorgrundkörper angeordnet ist, relativ zum Hairpinendbereich gebogen, sodass der erste Winkel zwischen dem Hairpinendbereich und dem freien Bereich sowie zwischen dem freien Bereich und dem Hairpin in der Statornut erzeugt wird. Anschließend wird der Hairpinendbereich beim zweiten Twisten zum freien Bereich zurückgebogen, sodass der zweite Winkel zwischen dem Hairpinendbereich beim zweiten Twisten zum freien Bereich erzeugt ist. Der erste Winkel beträgt vorzugsweise zwischen 30 ° und 60 °, vorzugsweise etwa 50 °. Der zweite Winkel beträgt vorzugsweise zwischen 0 ° und 30 °, vorzugsweise etwa 5 °. Somit sind die Hairpinenden nach dem zweiten Twisten wieder gerade oder zumindest nahezu gerade ausgebildet. Dies hat den Vorteil, dass mit einfachen Mitteln sowie auf eine kostengünstige Art und Weise die Höhe des Wickelkopfes reduziert ist.

Es kann vorgesehen sein, dass nach dem zweiten Twisten die Hairpinenden schräg zur Längserstreckung der Hairpinenden abgelängt werden. Das Ablängen erfolgt vorzugsweise derart, dass eine Schnittfläche der Hairpinenden parallel oder zumindest im Wesentlichen parallel zur Grundkörperstirnseite des Statorgrundkörpers angeordnet ist. Dies hat den Vorteil, dass mit einfachen Mitteln sowie auf eine kostengünstige Art und Weise die Höhe des Wickelkopfes weiter reduziert ist.

Gemäß einem zweiten Aspekt der Erfindung wird die Aufgabe durch eine Elektromaschine zum Antreiben eines Kraftfahrzeugs gelöst. Die Elektromaschine weist ein Maschinengehäuse, einen Stator mit einer Statorwicklung und einen Rotor auf. Erfindungsgemäß weist die Statorwicklung einen Wickelkopf auf, bei welchem ein Twisten der Hairpinenden durch ein erfindungsgemäßes Verfahren durchgeführt ist.

Bei der erfindungsgemäßen Elektromaschine zum Antreiben eines Kraftfahrzeugs ergeben sich sämtliche Vorteile, die bereits zu einem Verfahren zum Twisten von Hairpinenden von Hairpins eines Stators für eine Elektromaschine zum Antreiben eines Kraftfahrzeugs gemäß dem ersten Aspekt der Erfindung beschrieben worden sind. Demnach hat die erfindungsgemäße Elektromaschine gegenüber herkömmlichen Elektromaschinen den Vorteil, dass mit einfachen Mitteln sowie auf eine kostengünstige Art und Weise ein Statorwickelkopf bereitgestellt ist, der besonders geringe axiale Abmessungen aufweist. Durch das mehrstufige Twisten können für die Herstellung des Stators Hairpins mit einer reduzierten Länge verwendet werden, sodass weniger Abfall durch Ablängen entsteht. Bei gleichen Abmessungen weist der Stator somit gegenüber herkömmlichen Statoren eine höhere Leistung auf.

Gemäß einem dritten Aspekt der Erfindung wird die Aufgabe durch ein Kraftfahrzeug gelöst. Das Kraftfahrzeug weist ein elektrisches oder hybrides Antriebssystem zum Antreiben des Kraftfahrzeugs auf. Erfindungsgemäß weist das Antriebssystem zum Antreiben des Kraftfahrzeugs eine erfindungsgemäße Elektromaschine auf.

Bei dem erfindungsgemäßen Kraftfahrzeug ergeben sich sämtliche Vorteile, die bereits zu einem Verfahren zum Twisten von Hairpinenden von Hairpins eines Stators für eine Elektromaschine zum Antreiben eines Kraftfahrzeugs gemäß dem ersten Aspekt der Erfindung sowie zu einer Elektromaschine zum Antreiben eines Kraftfahrzeugs gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine Elektromaschine mit einem Statorwickelkopf bereitgestellt ist, der besonders geringe axiale Abmessungen aufweist. Durch das mehrstufige Twisten können für die Herstellung des Stators Hairpins mit einer reduzierten Länge verwendet werden, sodass weniger Abfall durch Ablängen entsteht. Bei gleichen Abmessungen weist der Stator somit gegenüber herkömmlichen Statoren eine höhere Leistung auf.

Ein erfindungsgemäßes Verfahren zum Twisten von Hairpinenden von Hairpins eines Stators für eine Elektromaschine zum Antreiben eines Kraftfahrzeugs, eine erfindungsgemäße Elektromaschine zum Antreiben eines Kraftfahrzeugs sowie ein erfindungsgemäßes Kraftfahrzeug werden nachfolgend anhand von Zeichnungen näher erläutert. Es zeigen jeweils schematisch:
- Figur 1: in einer perspektivischen, explodierten Ansicht eine Elektromaschine gemäß einer bevorzugten ersten Ausführungsform der Erfindung,
- Figur 2: in einer Schnittdarstellung einen ersten Zustand bei der Durchführung eines erfindungsgemäßen Verfahrens,
- Figur 3: in einer Schnittdarstellung einen zweiten Zustand bei der Durchführung eines erfindungsgemäßen Verfahrens,
- Figur 4: in einer Schnittdarstellung einen dritten Zustand bei der Durchführung eines erfindungsgemäßen Verfahrens,
- Figur 5: in einer Schnittdarstellung einen dritten Zustand bei einer alternativen Durchführung eines erfindungsgemäßen Verfahrens,
- Figur 6: in einer Seitenansicht eine bevorzugte Ausführungsform eines erfindungsgemäßen Kraftfahrzeugs, und
- Figur 7: in einem Ablaufdiagramm eine bevorzugte Ausführungsform eines erfindungsgemäßen Verfahrens.

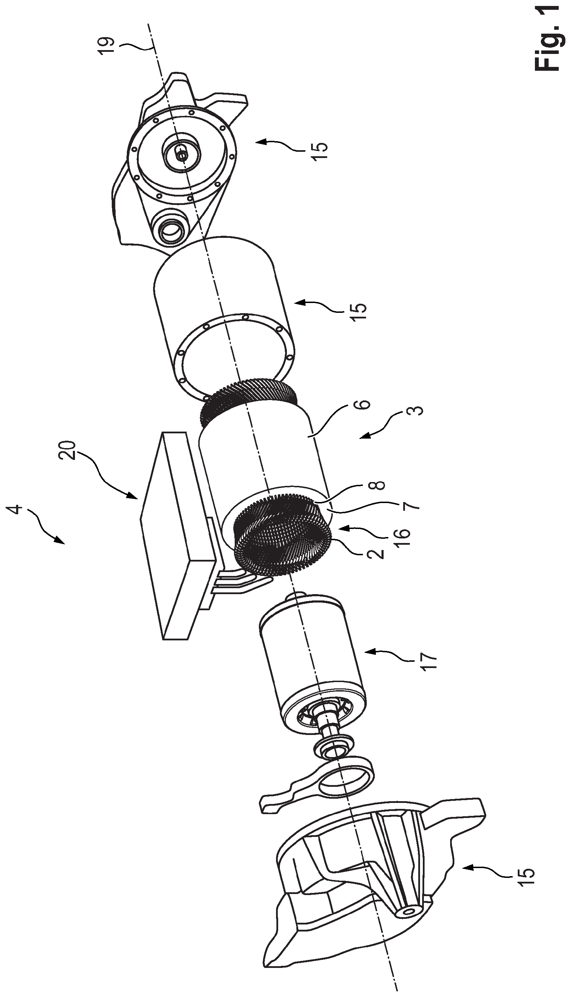

Elemente mit gleicher Funktion und Wirkungsweise sind in den Figuren 1 bis 7 jeweils mit denselben Bezugszeichen versehen.

In Fig. 1 ist eine Elektromaschine 4 gemäß einer bevorzugten ersten Ausführungsform der Erfindung schematisch in einer perspektivischen, explodierten Ansicht dargestellt. Die Elektromaschine weist einen Stator 3 und einen Rotor 17 auf, die koaxial zu einer Längsachse 19 der Elektromaschine 4 in einem mehrteiligen Maschinengehäuse 15 anordenbar sind. Der Stator 3 weist einen Statorgrundkörper 6 auf, in dem mehrere Statornuten 8 ausgebildet sind, die sich parallel zur Längsachse 19 durch den Statorgrundkörper 6 erstrecken. An Grundkörperstirnseiten 7 des Grundkörpers 6 sind die Statornuten 8 offen ausgebildet. In den Statornuten 8 sind Hairpins 2 angeordnet, die an den Grundkörperstirnseiten 7 aus den Statornuten 8 herausragen und dort jeweils einen Wickelkopf bilden. Die Hairpins 2 sind zu einer Statorwicklung gezielt miteinander verschaltet. Zum gezielten Bestromen der Statorwicklung weist die Elektromaschine 4 eine Leistungselektronik 20 auf.

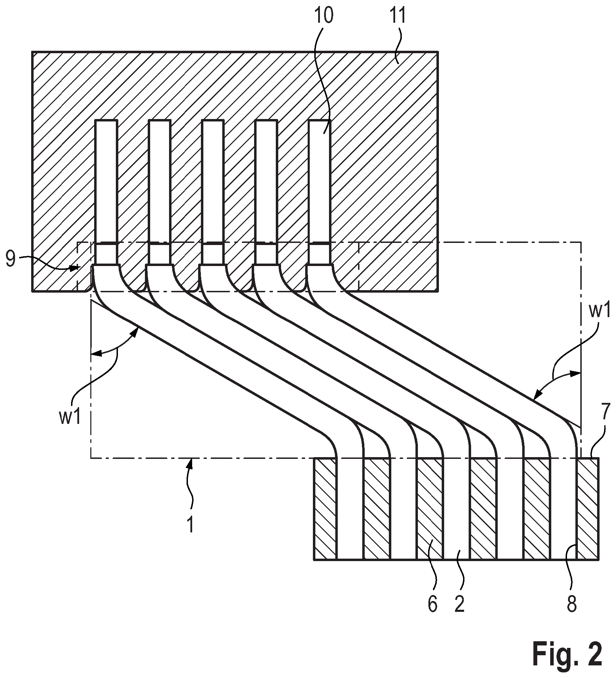

Fig. 2 zeigt einen ersten Zustand bei der Durchführung eines erfindungsgemäßen Verfahrens schematisch in einer Schnittdarstellung. Der erste Zustand wird direkt nach dem ersten Twisten erreicht. Die aus den Statornuten 8 des Statorgrundkörpers 6 herausragenden Hairpinenden 1 der Hairpins 2 weisen Hairpinendbereiche 9 auf, die in Aufnahmen 10 eines Twistwerkzeugs 11 aufgenommen sind. Das Twistwerkzeug 11 ist im ersten Zustand derart zum Statorgrundkörper 6 verdreht, dass die freien Bereiche der Hairpinenden 9 relativ zu den Bereichen der Hairpins 2 in den Statornuten 8 sowie zu den Hairpinendbereichen 9 einen jeweils einen ersten Winkel w1 aufweisen.

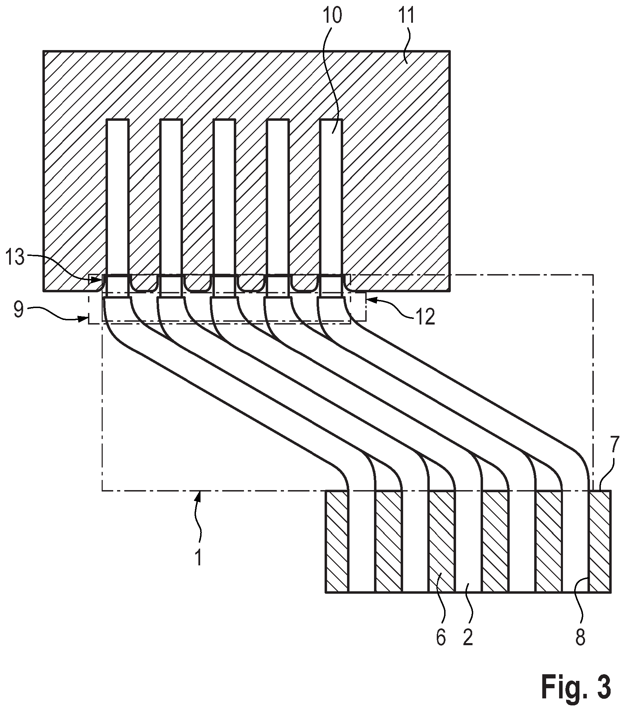

In Fig. 3 ist ein zweiter Zustand bei der Durchführung eines erfindungsgemäßen Verfahrens schematisch in einer Schnittdarstellung abgebildet. Der zweite Zustand wird direkt nach dem Herausbewegen eines Teilbereichs 12 der Hairpinendbereiche 9 aus den Aufnahmen 10 des Twistwerkzeugs 11 erreicht. Somit verbleibt jeweils ein Restbereich 13 der Hairpinendbereiche 9 in den Aufnahmen 10. Direkt ausgehend vom zweiten Zustand kann das zweite Twisten erfolgen.

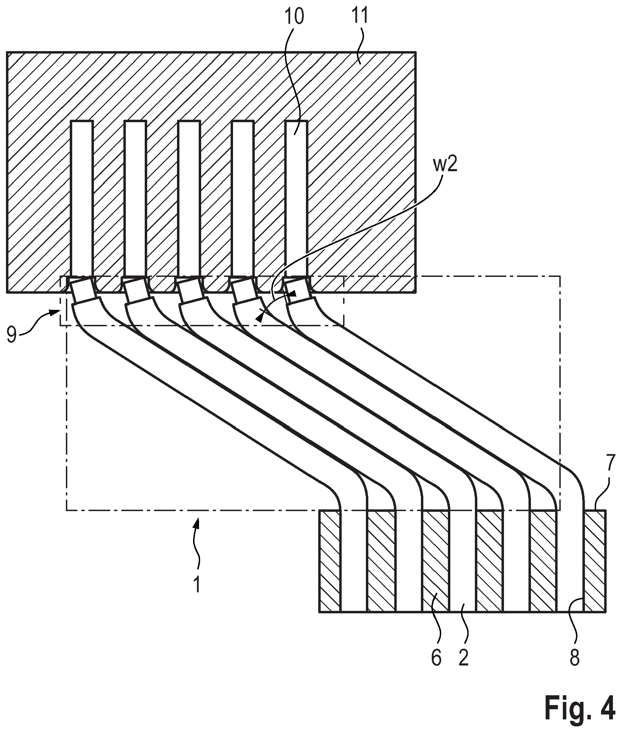

Fig. 4 zeigt einen dritten Zustand bei der Durchführung bei der Durchführung eines erfindungsgemäßen Verfahrens schematisch in einer Schnittdarstellung. Der dritte Zustand wird direkt nach dem zweiten Twisten erreicht. Die Hairpinendbereiche 9 sind durch das zweite Twisten derart verbogen, dass zwischen den Hairpinendbereichen 9 und den benachbarten Bereichen der Hairpinenden 1 ein zweiter Winkel w2 ausgebildet ist, der kleiner ist als der erste Winkel w1.

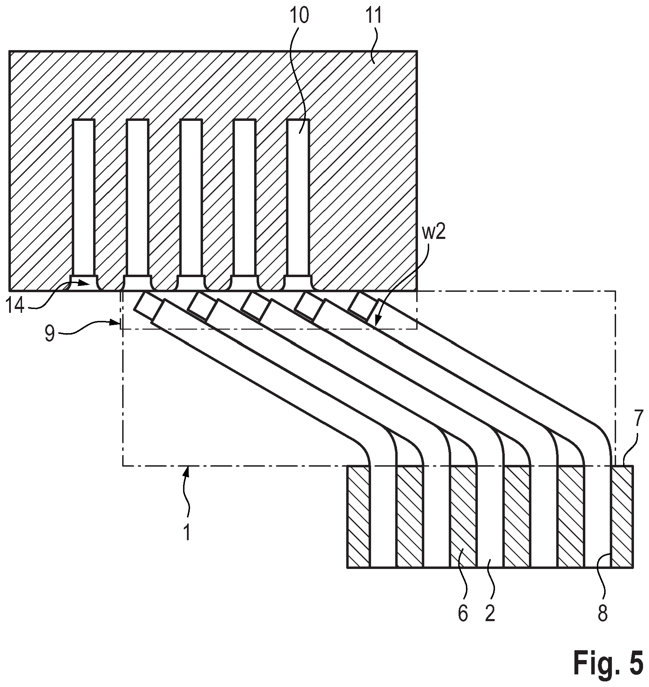

Fig. 5 zeigt einen dritten Zustand bei der Durchführung bei einer alternativen Durchführung eines erfindungsgemäßen Verfahrens schematisch in einer Schnittdarstellung. Der dritte Zustand wird direkt nach dem zweiten Twisten erreicht. Die Hairpinendbereiche 9 sind durch das zweite Twisten derart verbogen, dass die Hairpinenden 1 abgesehen von der Krümmung im Bereich der Grundkörperstirnseite 7 wieder gerade ausgebildet sind. Ein zweiter Winkel w2 zwischen den Hairpinendbereichen 9 und den benachbarten Bereichen der Hairpinenden 1 beträgt in diesem Beispiel etwa 0 °.

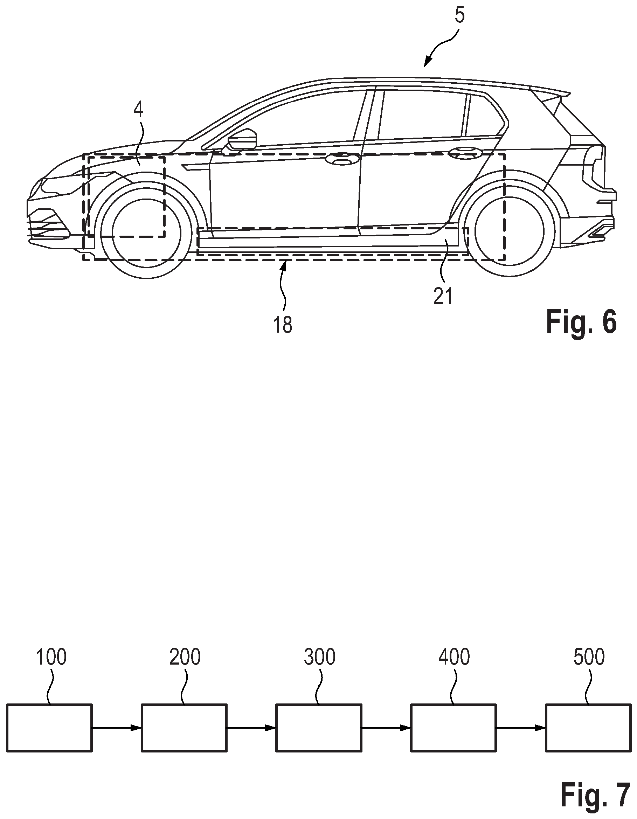

In Fig. 6 ist eine bevorzugte Ausführungsform eines erfindungsgemäßen Kraftfahrzeugs 5 schematisch in einer Seitenansicht dargestellt. Das Kraftfahrzeug 5 weist ein elektrisches oder hybrides Antriebssystem 18 mit einer erfindungsgemäßen Elektromaschine 4 zum Antreiben des Kraftfahrzeugs 5 und einer Traktionsbatterie 21 zum Versorgen der Elektromaschine 4 mit elektrischer Energie auf.

Fig. 7 zeigt eine bevorzugte Ausführungsform eines erfindungsgemäßen Verfahrens zum Twisten von Hairpinenden 1 von Hairpins 2 eines Stators 3 für eine Elektromaschine 4 zum Antreiben eines Kraftfahrzeugs 5 schematisch in einem Ablaufdiagramm. In einer ersten Verfahrensaktion 100 wird ein Statorgrundkörper 6 bereitgestellt. Der Statorgrundkörper 6 weist Statornuten 8 auf, in welchen Hairpins 2 derart angeordnet sind, dass Hairpinenden 1 der Hairpins 2 an Grundkörperstirnseiten 7 des Statorgrundkörpers 6 aus den Statornuten 8 parallel zu einer Längsachse 19 des Stators 3 herausragen. In einer zweiten Verfahrensaktion 200 werden Hairpinendbereiche 9 der Hairpinenden 1 in Aufnahmen 10 eines Twistwerkzeugs 11 eingeführt. Dies kann beispielsweise durch ein Heranbewegen des Twistwerkzeugs 11 zum Statorgrundkörper 6 parallel zur Längsachse 19 erfolgen.

In einer dritten Verfahrensaktion 300 wird ein erstes Twisten der Hairpinenden 1 mit dem Twistwerkzeug 11 durchgeführt. Hierbei wird das Twistwerkzeug 11 vorzugsweise in Umfangsrichtung des Statorgrundkörpers 6 relativ zum Statorgrundkörper 6 derart verdreht, dass gerade Abschnitte der benachbarten Hairpinenden 1 einander kontaktieren und somit gegenseitig ein Widerlager bilden. Hierbei wird zwischen den Hairpinendbereichen 9 und den übrigen Bereichen der Hairpinenden 1 ein erster Winkel w1 gebildet. Vorzugsweise beträgt der erste Winkel w1 zwischen 30 ° und 60 °. Die Hairpinendbereiche 9 verbleiben in den Aufnahmen 10.

In einer vierten Verfahrensaktion 400 wird ein Teilbereich 12 der Hairpinendbereiche 9 aus den Aufnahmen 10 herausbewegt. Dies erfolgt vorzugsweise durch ein Wegbewegen des Twistwerkzeugs 11 vom Statorgrundkörper 6. Ein Restbereich 13 der Hairpinendbereiche 9 verbleibt in den Aufnahmen 10. In einer fünften Verfahrensaktion 500 wird ein zweites Twisten der Hairpinenden 1 durch das Twistwerkzeug 11 durchgeführt. Hierbei wird das Twistwerkzeug 11 vorzugsweise in Umfangsrichtung des Statorgrundkörpers 6 relativ zum Statorgrundkörper 6 derart verdreht, dass zwischen den Hairpinendbereichen 9 und den übrigen Bereichen der Hairpinenden 1 jeweils ein zweiter Winkel w2 ausgebildet ist. Vorzugsweise beträgt der zweite Winkel w2 zwischen 0 ° und 5 °.

### Bezugszeichenliste

- 1: Hairpinende
- 2: Hairpin
- 3: Stator
- 4: Elektromaschine
- 5: Kraftfahrzeug
- 6: Statorgrundkörper
- 7: Grundkörperstirnseite
- 8: Statornut
- 9: Hairpinendbereich
- 10: Aufnahme
- 11: Twistwerkzeug
- 12: Teilbereich
- 13: Restbereich
- 14: Aufweitung
- 15: Maschinengehäuse
- 16: Statorwicklung
- 17: Rotor
- 18: Antriebssystem
- 19: Längsachse
- 20: Leistungselektronik
- 21: Traktionsbatterie

- 100: erste Verfahrensaktion
- 200: zweite Verfahrensaktion
- 300: dritte Verfahrensaktion
- 400: vierte Verfahrensaktion
- 500: fünfte Verfahrensaktion

- w1: erster Winkel
- w2: zweiter Winkel

## Patentansprüche

1. Verfahren zum Twisten von Hairpinenden (1) von Hairpins (2) eines Stators (3) für eine Elektromaschine (4) zum Antreiben eines Kraftfahrzeugs (5), aufweisend:
- Bereitstellen eines Statorgrundkörpers (6), bei welchem die Hairpinenden (1) an einer Grundkörperstirnseite (7) des Statorgrundkörpers (6) aus Statornuten (8) des Statorgrundkörpers (6) herausragen,
- Einführen von Hairpinendbereichen (9) der Hairpinenden (1) in Aufnahmen (10) eines Twistwerkzeugs (11),
- Erstes Twisten der Hairpinenden (1) mit dem Twistwerkzeug (11) derart, dass die Hairpinendbereiche (9) in den Aufnahmen (10) bleiben und zwischen den Hairpinendbereichen (9) und den übrigen Bereichen der Hairpinenden (1) jeweils ein erster Winkel (w1) ausgebildet ist,
- Herausbewegen eines Teilbereichs (12) der Hairpinendbereiche (9) aus den Aufnahmen (10) und
- Zweites Twisten der Hairpinenden (1) mit dem Twistwerkzeug (11) derart, dass zwischen den Hairpinendbereichen (9) und den übrigen Bereichen der Hairpinenden (1) jeweils ein zweiter Winkel (w2) ausgebildet ist.

2. Verfahren nach Anspruch 1,
**dadurch gekennzeichnet,**
**dass** das Herausbewegen des Teilbereichs (12) der Hairpinendbereiche (9) aus den Aufnahmen (10) derart erfolgt, dass der Teilbereich (12) größer ist als der in den Aufnahmen (10) verbleibende Restbereich (13) des Hairpinendbereichs (9).

3. Verfahren nach Anspruch 1 oder 2,
**dadurch gekennzeichnet,**
**dass** das Herausbewegen des Teilbereichs (12) der Hairpinendbereiche (9) aus den Aufnahmen (10) derart erfolgt, dass der gesamte in den Aufnahmen (10) verbleibende Restbereich (13) des Hairpinendbereichs (9) zum Twistwerkzeug (11) elektrisch leitend ist.

4. Verfahren nach einem der vorangegangenen Ansprüche,
**dadurch gekennzeichnet,**
**dass** das Einführen von Hairpinendbereichen (9) der Hairpinenden (1) in den Aufnahmen (10) des Twistwerkzeugs (11) derart erfolgt, dass ein umfänglich isolierter Bereich der Hairpinendbereiche (9) in den Aufnahmen (10) angeordnet ist.

5. Verfahren nach einem der vorangegangenen Ansprüche,
**dadurch gekennzeichnet,**
**dass** ein Twistwerkzeug (11) verwendet wird, das an einer dem Statorgrundkörper (6) zugewandten Öffnung der Aufnahmen (10) eine Aufweitung (14) aufweist.

6. Verfahren nach Anspruch 5,
**dadurch gekennzeichnet,**
**dass** ein Twistwerkzeug (11) verwendet wird, bei welchem die Aufweitung (14) als Rundung, als Fase oder als Kombination aus Rundung und Fase ausgebildet ist.

7. Verfahren nach einem der vorangegangenen Ansprüche,
**dadurch gekennzeichnet,**
**dass** das zweite Twisten derart erfolgt, dass der zweite Winkel (w2) kleiner ist als der erste Winkel (w1).

8. Verfahren nach einem der vorangegangenen Ansprüche,
**dadurch gekennzeichnet,**
**dass** nach dem zweiten Twisten die Hairpinenden (1) schräg zur Längserstreckung der Hairpinenden (1) abgelängt werden.

9. Elektromaschine (4) zum Antreiben eines Kraftfahrzeugs (5), aufweisend ein Maschinengehäuse (15), einen Stator (3) mit einer Statorwicklung (16) und einen Rotor (17),
**dadurch gekennzeichnet,**
**dass** die Statorwicklung (16) einen Wickelkopf aufweist, bei welchem ein Twisten der Hairpinenden (1) durch ein Verfahren nach einem der vorangegangenen Ansprüche durchgeführt ist.

10. Kraftfahrzeug (5), aufweisend ein elektrisches oder hybrides Antriebssystem (18) zum Antreiben des Kraftfahrzeugs (5),
**dadurch gekennzeichnet,**
**dass** das Antriebssystem (18) zum Antreiben des Kraftfahrzeugs (5) eine Elektromaschine (4) nach Anspruch 9 aufweist.
